# EUROPEAN PATENT APPLICATION

(11) **EP 3 035 172 A1**
(43) Date of publication of application: **22.06.2016**
(21) Application number: 15195772.7
(22) Date of filing: 23.11.2015
(51) Int. Cl.: G06F 3/041, G06F 3/0488

(54) **METHOD AND DEVICE FOR ACTIVATING OPERATION STATE OF MOBILE TERMINAL**

(30) Priority: 16.12.2014 CN 201410784576
(71) Applicant: Xiaomi Inc., Beijing 100085 (CN)
(72) Inventor: YANG, Kun, 100085 BEIJING (CN); TAO, Jun, 100085 BEIJING (CN); JIANG, Zhongsheng, 100085 BEIJING (CN)
(74) Representative: Delumeau, François Guy

(57) **Abstract**

The invention relates to a method and a device for activating an operation state of a mobile terminal. The method includes: measuring (S101, S201, S302) a first duration time for which a heel-of-hand contact event lasts on a screen of the mobile terminal; measuring (S102) a second duration time for which a finger touches the screen; and determining (S103) to activate a preset operation state on the mobile terminal according to the first duration time and the second duration time.

## Description

### TECHNICAL FIELD

The invention generally relates to the field of electronic technology, and more particularly, to a method and a device for activating an operation state of a mobile terminal.

### BACKGROUND

When a user holds an electronic apparatus, especially one with a relatively large screen, and wishes to enter a single-hand mode, it is necessary for the user to click a menu on the screen of the apparatus to enter the single-hand mode. When the user holds the apparatus with one single hand and has not entered the single-hand mode, it is difficult to implement the clicking operation with the single hand. Sometimes the user is even required to operate with both hands to activate the single-hand mode, which badly influences the user experience.

### SUMMARY

In order to overcome the problems existing in the prior art, embodiments of the invention provide a method and a device for activating an operation state of a mobile terminal, which are used to improve the user experience.

According to a first aspect of the invention, there provides a method for activating an operation state of a mobile terminal, comprising steps of:
measuring a first duration time for which a heel-of-hand contact event lasts on a screen of the mobile terminal;
measuring a second duration time for which a finger touches the screen; and
determining to activate a preset operation state on the mobile terminal according to the first duration time and the second duration time.

In an embodiment, the method may further comprising steps of:
when it is monitored that the finger touches the screen, recording a starting time from which the finger touches the screen;
monitoring, from the beginning of the starting time, whether a touch region of the finger on the screen exceeds a preset deviation range from beginning of the starting time; and
when it is monitored that the touch range does not exceed the preset deviation range, performing the step of measuring the second duration time for which the finger touches the touch region.

In a particular embodiment, the preset operation state includes a preset operation mode and a preset operation interface, and the step of determining to activate the preset operation state on the mobile terminal according to the first duration time and the second duration time may include:
if it is determined that the first duration time exceeds a first preset threshold value, and the second duration time exceeds a second preset threshold value, activating the preset operation mode; and
if the first duration time exceeds the first preset threshold value, and the second duration time exceeds a third preset threshold value, activating the preset operation interface, wherein the third preset threshold value is greater than the second preset threshold value.

In a particular embodiment, the preset operation interface includes at least an operation interface of a single-hand operation and an operation interface of a navigation button, and the step of activating the preset operation interface may comprises steps of:
if it is determined that the first duration time exceeds the first preset threshold value, and the second duration time exceeds the third preset threshold value, activating the operation interface of the single-hand operation; and
if it is determined that the first duration time exceeds the first preset threshold value, and the second duration time exceeds a fourth preset threshold value, activating the operation interface of the navigation button, wherein the fourth preset threshold value is greater than the third preset threshold value.

In a particular embodiment, the preset operation interface further comprises a an operation interface of a return option or an operation interface of a cancel option, and after the step of activating the operation interface of the single-hand operation or the step of activating the operation interface of the navigation button, the method further comprises a step of:
activating the return operation interface or the cancel operation interface.

In an embodiment, the method may further comprises a step of:
determining a preset operation interface to be activated by a setting option of the mobile terminal.

According to a second aspect of the invention, there provides a device for activating an operation state of a mobile terminal, comprising:
a first measurement module configured to measure a first duration time for which a heel-of-hand contact event lasts on a screen of the mobile terminal;
a second measurement module configured to measure a second duration time for which a finger touches the screen; and
a first determination module configured to determine to activate a set operation state on the mobile terminal according to the first duration time measured by the first measurement module and the second duration time measured by the second measurement module.

In a particular embodiment, the device may further comprise:
a recording module configured to, when it is monitored that the finger touches the screen, record a starting time from which the finger touches the screen;
a monitoring module configured to monitor, from beginning of the starting time obtained by the recording module, whether a touch region of the finger on the screen exceeds a preset deviation range; and
when the monitoring module monitors that the touch range does not exceed the preset deviation range, the second measurement module measures the second duration time for which the finger touches the touch region.

In a particular embodiment, the preset operation state may comprise a preset operation mode and a preset operation interface, and the first determination module may include:
a first activation sub-module configured to, if the first duration time measured by the first measurement module exceeds a first preset threshold value, and the second duration time measured by the second measurement module exceeds a second preset threshold value, activate the preset operation mode;
a second activation sub-module configured to, if the first duration time measured by the first measurement module exceeds the first preset threshold value, and the second duration time measured by the second measurement module exceeds a third preset threshold value, activate the preset operation interface.

In a particular embodiment, the preset operation interface comprises at least an operation interface of a single-hand operation and an operation interface of a navigation button, and the second activation sub-module may comprise:
a third activation sub-module configured to, if the second duration time measured by the second measurement module exceeds the third preset threshold value, activate the operation interface of the single-hand operation; and
a fourth activation sub-module configured to, if the second duration time measured by the second measurement module exceeds a fourth preset threshold value, activate the operation interface of the navigation button, wherein the fourth preset threshold value is greater than the third preset threshold value.

In a particular embodiment, the preset operation interface may further comprise an operation interface of a return option or an operation interface of a cancel option, and the second activation sub-module may further comprise:
a fifth activation sub-module configured to activate the operation interface of the return option or the operation interface of the cancel option, after the third activation sub-module activates the operation interface of the single-hand operation or the fourth activation sub-module activates the operation interface of the navigation button.

In a particular embodiment, the device may further comprise:
a second determination module configured to, by a setting option of the mobile terminal, determine a preset operation interface to be activated by the first determination module.

According to a third aspect of the embodiments of the invention, there provides a device for activating an operation state of a mobile terminal, including:
a processor;
a memory for storing instructions executable by the processor;
wherein the processor is configured to:
   measure a first duration time for which a heel-of-hand contact event lasts on a screen of the mobile terminal;
   measure a second duration time for which a finger touches the screen; and
   determine to activate a preset operation state on the mobile terminal according to the first duration time and the second duration time.

A computer program is provided according to a fourth aspect of the invention. The computer program performs the steps of the method for activating an operation state of a mobile terminal when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the invention may include the following advantageous effects: a first duration time of a heel-of-hand contact event and a second duration time of a finger touch event are measured, and a preset operation state on a mobile terminal is determined to be activated according to the first duration time and the second duration time, thereby a user may be allowed to enter the preset operation state by a single-hand operation, and a procedure for the user to operate the mobile terminal may be simplified, such that the user may easily enter the preset operation state, and the user experience of operating the mobile terminal may be improved.

It shall be understood that both the foregoing general description and the following details are exemplary and explanatory only and may not limit the invention.

### BRIEF DESCRIPTION OF THE DRAWINGS

The accompanying drawings, which are hereby incorporated in and constitute a part of this specification, illustrate embodiments consistent with the invention and, together with the description, serve to explain the principles of the invention.
Fig. 1A is a flow chart showing a method for activating an operation state of a mobile terminal, according to an exemplary embodiment.
Fig. 1B is a diagram illustrating a heel-of-hand contact location and a finger contact location, according to an exemplary embodiment.
Fig. 2 is a flow chart showing a method for activating an operation state of a mobile terminal, according to a first exemplary embodiment.
Fig. 3A is a flow chart showing a method for activating an operation state of a mobile terminal, according to a second exemplary embodiment.
Fig. 3B is a diagram illustrating an operation interface of a single-hand operation, according to a second exemplary embodiment.
Fig. 3C is a diagram illustrating an operation interface of a navigation button, according to a second exemplary embodiment.
Fig. 4 is a block diagram illustrating a device for activating an operation state of a mobile terminal, according to an exemplary embodiment.
Fig. 5 is a block diagram illustrating another device for activating an operation state of a mobile terminal, according to an exemplary embodiment.
Fig. 6 is a block diagram illustrating a second activation sub-module, according to an exemplary embodiment.
Fig. 7 is a block diagram illustrating a device applicable to activating an operation state of a mobile terminal, according to an exemplary embodiment.

### DETAILED DESCRIPTION

Exemplary embodiments will be described in detail herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the invention. On the contrary, they are only examples of devices and methods that are consistent with some aspects of the invention as recited in the claims.

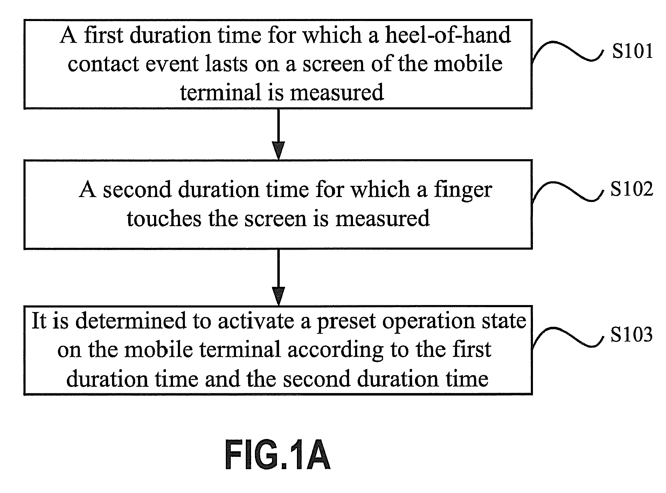

Fig. 1A is a flow chart showing a method for activating an operation state of a mobile terminal, according to an exemplary embodiment. The method for activating the operation state of the mobile terminal may be implemented by a mobile terminal apparatus (for example, a smartphone, a tablet PC). As shown in Fig. 1A, the method for activating the operation state of the mobile terminal includes the following steps S101 to S103.

In the step S101, a first duration time for which a heel-of-hand contact event lasts on a screen of the mobile terminal is measured.

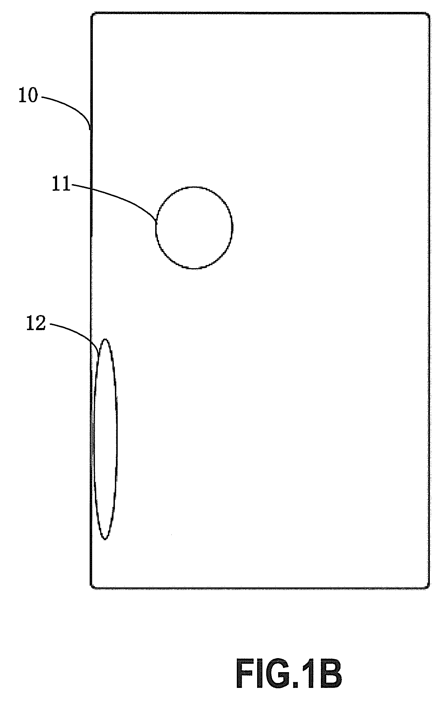

For example, as shown in Fig. 1B, when a user holds a mobile terminal 10 in hand, a touch control integrated circuit (IC) on the mobile terminal 10 recognizes a heel-of-hand contact event wherein a heel-of-hand of the user contacts the mobile terminal 10 at a region 12. After recognizing the heel-of-hand contact event, the touch control IC sends a corresponding message to a host (for example, a Central Process Uunit) in the mobile terminal 10. After the host receives the message, the host may start to measure the first duration time for which the heel-of-hand contact event lasts, i.e. the duration time for the heel-of hand contacting the mobile terminal. Fig. 1B describes an exemplary example in which the user holds the mobile terminal 10 with his/her left hand, and those skilled in the art may understand that it is possible that the user holds the mobile terminal 10 with his/her right hand. In this case the user's heel-of-hand contact region is on the right side of the mobile terminal 10.

In the step S102, a second duration time for which a finger touches the screen is measured.

Similar to the above-described step S101, when a finger of the user touches the screen of the mobile terminal 10, the touch control IC recognizes a finger contact region 11 where the user's finger touches the screen of the mobile terminal 10. In this document this finger and the heel of hand belong to a same hand of the user. After recognizing a finger touch event, the touch control IC sends a corresponding message to the host in the mobile terminal 10. After the host receives the message, the host may start to measure the second duration time for which the finger touch event lasts. Furthermore, the embodiment of the invention may measure a second duration time for one finger contacting the mobile terminal or a second duration time for multiple fingers contacting the mobile terminal. In other words, the finger touch event may be a touch event of one finger, or a touch event of multiple fingers. The embodiment of the invention does not limit the number of the fingers. Furthermore, the embodiment of the invention does not limit whether the finger is in a moving state or not. As long as the finger continuously touches the screen of the mobile terminal, regardless of whether the finger is moving, the second duration time may be measured.

In the step S103, it is determined to activate a preset operation state on the mobile terminal according to the first duration time and the second duration time.

Different operation states may be activated according to predetermined values of the first duration time and the second duration time. For example, it may be predetermined that if the first duration time exceeds 2 seconds, and the second duration time exceeds 1.5 seconds, a single-hand mode representing that the user holds the mobile terminal with a single hand is activated; it may be predetermined that if the first duration time exceeds 2 seconds, and the second duration time exceeds 2 seconds, a preset operation interface is activated; for example, it may be predetermined that if the second duration time exceeds 2 seconds, an operation interface for a single-hand operation is activated; and if the second duration time exceeds 3 seconds, an operation interface for a virtual navigation button is activated, and so on. That is to say, the user may predetermine time threshold values according to his actual operation preferences. The preset operation state comprises, for example, an operation mode (e.g., a single-hand operation mode), and/or an operation interface (e.g., a user interface of a single-hand mode, a user interface for a virtual navigation button, a user interface for a cancel option or a user interface for return option, a user interface of a contact address book, or the like). These exemplary operation interfaces will be described in detail hereinafter. A preset operation interface may be determined or chosen among more than one preset operation interfaces based on actual use preferences of the user. For example, the user determines or chooses an operation interface dedicated for the single-hand mode as the operation interface to be activated. As known in the art, this operation interface (the one dedicated for the single-hand mode) is designed to facilitate user's single-hand operations on the mobile terminal. It is desired that this operation interface is automatically activated when the user holds the mobile terminal with a single hand. In another example, the user determines an interface of a contact address book as the operation interface to be activated. As known in the art, the interface of a contact address book presents contact addresses (ex. telephone numbers, email addresses...) of the user. When this interface is activated, user may easily select a target contact address on this interface to communicate with the target contact person.

In the present embodiment, a first duration time of a heel-of-hand contact event and a second duration time of a finger touch event are measured, and a preset operation state on a mobile terminal is determined to be activated according to the first duration time and the second duration time, thereby a user may be allowed to enter the set operation state by a single-hand operation, and a procedure for the user to operate the mobile terminal may be simplified, such that the user may easily enter the set operation state, and the user experience of operating the mobile terminal may be improved.

In an embodiment, the method for activating the operation state of the mobile terminal may further include:
when it is monitored that the finger touches the screen, recording a starting time from which the finger touches the screen;
monitoring, from the beginning of the starting time, whether a touch region of the finger on the screen exceeds a preset deviation range ; and

When it is monitored that the touch range does not exceed the preset deviation range, the above-described step S102 is performed. This preset deviation range is defined by a predetermined touch area on the terminal.

In an embodiment, if the preset operation state includes a preset operation mode and a preset operation interface, the step S103 may further include:
if it is determined that the first duration time exceeds a first preset threshold value, and the second duration time exceeds a second preset threshold value, activating the preset operation mode; and
if the first duration time exceeds the first preset threshold value, and the second duration time exceeds a third preset threshold value, activating the preset operation interface, wherein the third preset threshold value is greater than the second preset threshold value.

In an embodiment, the preset operation interface includes at least an operation interface dedicated for a single-hand operation and an operation interface of a navigation button, and the step of activating the set operation interface may include:
if the second duration time exceeds the third preset threshold value, activating the operation interface dedicated for the single-hand operation; and
if the second duration time exceeds a fourth preset threshold value, activating the operation interface of the navigation button, wherein the fourth preset threshold value is greater than the third preset threshold value.

In an embodiment, the preset operation interface further includes a return operation interface or a cancel operation interface, and after the activating the operation interface dedicated for the single-hand operation or after the activating the operation interface of the navigation button, the method for activating the operation state of the mobile terminal may include:
activating the return operation interface or the cancel operation interface.

In an embodiment, the method for activating the operation state of the mobile terminal may further include:
determining a preset operation state to be activated by a setting option of the mobile terminal.

This step will be described in detail hereinafter.

Details of how to activate the operation interface on the mobile terminal may be described in the following embodiments.

So far, by the above-described method provided by the embodiments of the invention, a user may be allowed to enter a preset operation state by a single-hand operation. The procedure of the user operating a mobile terminal may be simplified, such that the user may easily enter the preset operation state, and the user experience of operating the mobile terminal may be improved.

The technical solutions provided by the embodiments of the invention are described hereinafter with reference to the detailed embodiments.

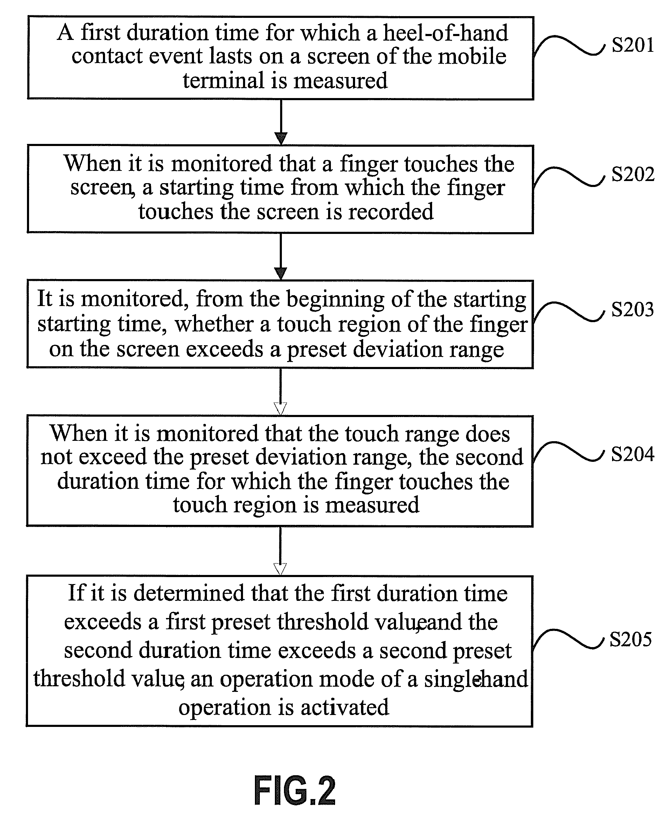

Fig. 2 is a flow chart showing a method for activating an operation state of a mobile terminal, according to a first exemplary embodiment. The present embodiment uses the above-described method provided by the embodiments of the invention, and describes an exemplary example in which a single-hand operation mode is activated on the mobile terminal. As shown in Fig. 2, the method includes the following steps.

In step S201, a first duration time for which a heel-of-hand contact event lasts on a screen of the mobile terminal is measured.

The step S201 is similar to the step S101, thus the details of the step S201 will be omitted herein.

In step S202, when it is monitored that a finger touches the screen, a starting time from which the finger touches the screen is recorded.

For example, when it is monitored that a finger of a user touches the screen at 13 o'clock 15 minute 20 second on December 4, 2014, this time point is recorded.

In step S203, it is monitored, from the beginning of the starting time, whether a touch region of the finger on the screen exceeds a preset deviation range.

In step S204, when it is monitored that the touch range does not exceed the preset deviation range, the second duration time for which the finger touches the touch region is measured.

In the steps S203 and S204, when the user operates the mobile terminal, the hand of the user may inevitably move. Thus the location at which the user's finger touches the screen =will not be always fixed at a same location on the screen. In the embodiment of the invention, it is monitored whether the touch region of the finger on the screen exceeds a preset deviation range (for example, a predetermined touch area). As long as the user's finger keeps inside this preset range and touches the mobile terminal, the second duration time is measured. Thereby the second duration time may be more precisely measured, and the user interfaces may be activated more accurately.

In step S205, if it is determined that the first duration time exceeds a first preset threshold value, and the second duration time exceeds a second preset threshold value, an operation mode of a single-hand operation is activated.

In the invention, an exemplary example is described wherein a preset operation state is a single-hand operation mode. An operation mode dedicated for the single-hand operation which facilitates single-hand operations is automatically activated when the user holds the mobile terminal with a single hand. Thus it is not necessary for the user to click a menu option on the screen to enter the single-hand operation mode. The procedure for the user to operate the mobile terminal may be simplified, such that the user may more conveniently and easily operate the mobile terminal, and the user experience of operating the mobile terminal may be improved.

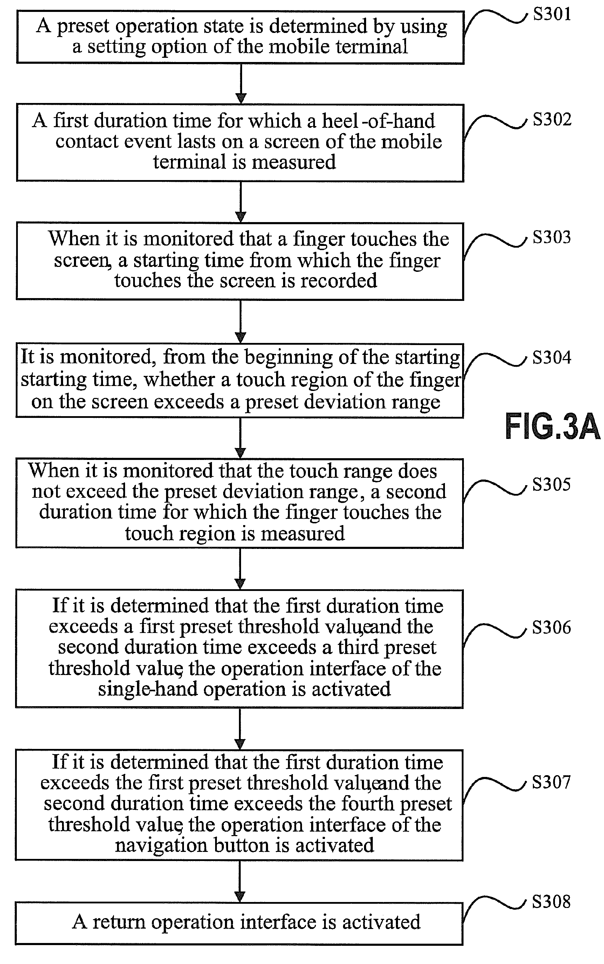

Fig. 3A is a flow chart showing a method for activating an operation state of a mobile terminal, according to a second exemplary embodiment. The present embodiment uses the above-described method provided by the embodiments of the invention, and describes an exemplary example in which a preset operation interface (for example an operation interface dedicated for a single-hand operation or an operation interface of a navigation button) is activated on the mobile terminal. As shown in Fig. 3A, the method includes the following steps.

In step S301, a preset operation state is determined by using a setting option on the mobile terminal.

In an embodiment, a user determines or chooses a preset operation interface among different preset operation interfaces by using a setting option on the mobile terminal. And the operation interface (i.e. User Interface) to be activated is the preset operation state that is determined by the user, and thus reflects the use preference of the user. Accordingly the user experience of operating the mobile terminal may be improved greatly. For example, the user determines, by using the setting option, an operation interface dedicated for the single-hand operation as the operation state to be activated, or determines an operation interface of the navigation button as the operation state to be activated.

In step S302, a first duration time for which a heel-of-hand contact event lasts on a screen of the mobile terminal is measured.

In step S303, when it is monitored that a finger touches the screen, a starting time from which the finger touches the screen is recorded.

In step S304, it is monitored, from beginning of the starting time, whether a touch region of the finger on the screen exceeds a preset deviation range.

In step S305, when it is monitored that the touch range does not exceed the preset deviation range, a second duration time for which the finger touches the touch region is measured.

The description of the steps S302 to S305 may respectively refer to the description of the steps S201 to S204, and their details are omitted herein.

In step S306, if it is determined that the first duration time exceeds a first preset threshold value, and the second duration time exceeds a third preset threshold value, the operation interface dedicated for the single-hand operation is activated.

For example, the first preset threshold value is 2 seconds, and the second preset threshold value is 1.5 seconds, by comparing the first duration time with the first preset threshold value, and comparing the second duration time with the second preset threshold value, the operation state is determined to be activated. Furthermore, in order to activate more user interfaces, the embodiment of the invention may also determine to activate the user interface on the mobile terminal by setting a third preset threshold value, a fourth preset threshold value (for example, the third preset threshold value is 2.5 seconds, the fourth preset threshold value is 3.5 seconds or the like) or more preset threshold values. The first preset threshold value, the second preset threshold value or the like in the embodiments of the invention may be set based on actual use preferences of the user, and the embodiments of the invention do not limit a time length of a specific threshold value.

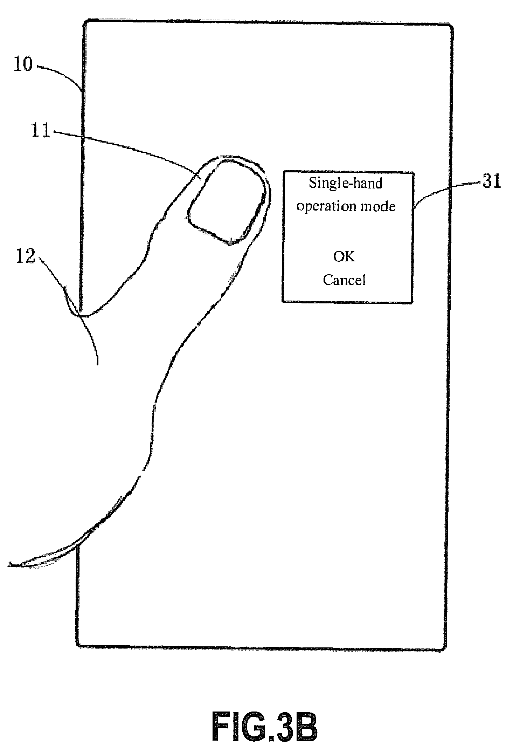

In a particular embodiment, as shown in Fig. 3B, a single-hand operation mode interface 31 on the mobile terminal may be activated. On this single-hand operation mode interface 31, options "OK" and "Cancel" are provided; by clicking the option "OK" on the single-hand operation mode interface 31, the user may confirm that the mobile terminal 10 enters a single-hand operation mode, then subsequent operations of the user may be processed in the single-hand operation mode. In another particular embodiment (not shown on the figure), a single-hand operation mode interface 31 does not present options that need to be clicked by the user, but indicates simply that the single-hand operation mode is activated. In other words, the single-hand operation mode is automatically activated without click operations on the mobile.

In step S307, if it is determined that the first duration time exceeds the first preset threshold value, and the second duration time exceeds the fourth preset threshold value, an operation interface of a navigation button is activated.

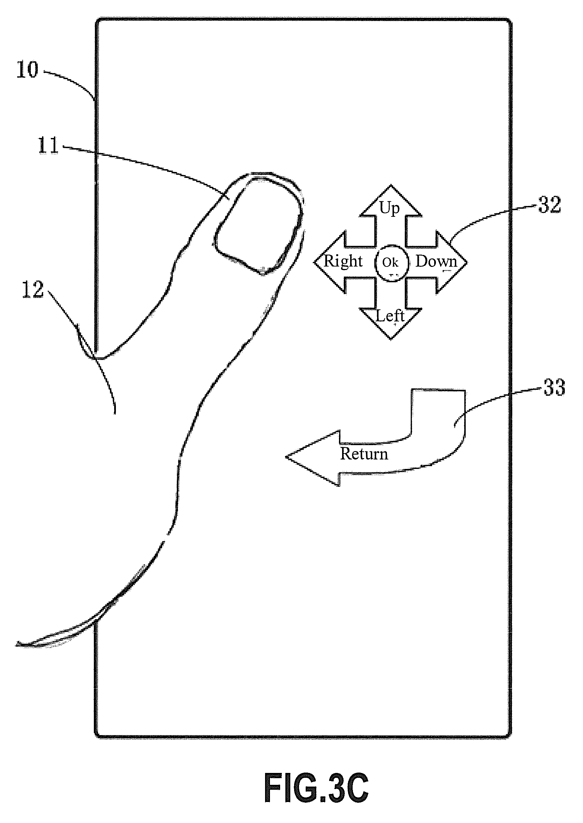

In an embodiment, when the first duration time is 2 seconds, the first preset threshold value is 2 seconds, the second duration time is 3 seconds, and the third preset threshold value is 2.5 seconds; as shown in Fig. 3C, a virtual navigation button interface 32 on the mobile terminal may be activated, its function setting may be similar to an actual navigation button on the mobile terminal 10; in the navigation button interface 32, options "up" "down", "left", "right" and "OK" are provided, and operation functions of these five options are consistent with that of actual navigation buttons; by activating an interface of the navigation button, the user may directly perform a corresponding operation of the mobile terminal 10, thereby the user may more conveniently operate the mobile terminal.

In step S308, an operation interface of a return option is activated.

As shown in Fig. 3C, when the preset operation interface is an operation interface of a navigation button, an operation interface of a return option 33 may be activated on the user interface of the mobile terminal, such that the user may return to an original operation interface from the preset operation interface, so as to ensure user to exit the activated preset operation interface. Alternatively, the operation interface of a return option may also refer to an operation interface of a cancel option, as long as it may ensure the user to return to a previous operation interface from a current operation interface.

In the present embodiment, the preset operation interface may be an operation interface of the single-hand operation or an operation interface of a navigation button. By activating the "single-hand operation mode", the user may make a choice according to his/her own needs of operating the mobile terminal. When the single-hand operation mode is entered or activated, subsequent operations of the user are processed in the single-hand operation mode which facilitates the user's operations. As known in the art, when the single-hand operation mode is activated, the user interface of the terminal is scaled down and adjusted to be within a region (e.g. a lower right corner, an upper right corner, a lower left corner, an upper left corner, etc.) where a thumb of a user can reach,for example. Thus the user may more conveniently and easily operate the mobile terminal, and the user experience of operating the mobile terminal may be improved. By activating a user interface of a "virtual navigation button", the user may feel using a real navigation button function on the mobile terminal when using the "virtual navigation button", such that the user may more conveniently and easily operate the mobile terminal, and the user experience of operating the mobile terminal may be improved.

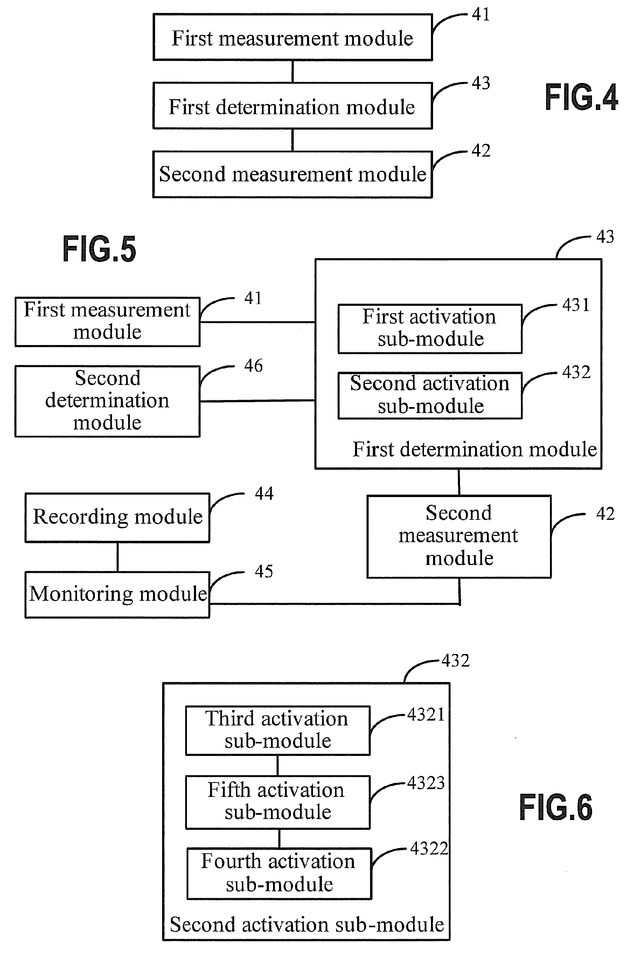

Fig. 4 is a block diagram illustrating a device for activating an operation state of a mobile terminal, according to an exemplary embodiment. The device for activating the operation state of the mobile terminal may be applied to the mobile terminal. As shown in Fig. 4, the device for activating the operation state of the mobile terminal includes:
a first measurement module 41 configured to measure a first duration time for which a heel-of-hand contact event lasts on a screen of the mobile terminal;
a second measurement module 42 configured to measure a second duration time for which a finger touches the screen;
a first determination module 43 configured to determine to activate a set operation state on the mobile terminal by the first duration time measured by the first measurement module 41 and the second duration time measured by the second measurement module 42.

As shown in Fig. 5, the device may further include:
a recording module 44 configured to, when it is monitored that the finger touches the screen, record a starting time from which the finger touches the screen;
a monitoring module 45 configured to monitor, from beginning of the starting time, whether a touch region of the finger on the screen exceeds a preset deviation range obtained by the recording module 44; and
when the monitoring module 45 monitors that the touch range does not exceed the preset deviation range, the second measurement module 42 measures the second duration time for which the finger touches the touch region.

In an embodiment, the set operation state includes a set operation mode and a preset operation interface, and the first determination module 43 may include:
a first activation sub-module 431 configured to, if the first duration time measured by the first measurement module 41 exceeds a first preset threshold value, and the second duration time measured by the second measurement module 42 exceeds a second preset threshold value, activate the preset operation mode;
a second activation sub-module 432 configured to, if the first duration time measured by the first measurement module 41 exceeds the first preset threshold value, and the second duration time measured by the second measurement module 42 exceeds a third preset threshold value, activate the set operation interface.

In an embodiment, the preset operation interface includes at least an operation interface of a single-hand operation and an operation interface of a navigation button. As shown in Fig. 6, the second activation sub-module 432 may include:
a third activation sub-module 4321 configured to, if the second duration time measured by the second measurement module 42 exceeds the third preset threshold value, activate the operation interface of the single-hand operation;
a fourth activation sub-module 4322 configured to, if the second duration time measured by the second measurement module 42 exceeds a fourth preset threshold value, activate the operation interface of the navigation button, wherein the fourth preset threshold value is greater than the third preset threshold value.

In an embodiment, the set operation interface may include an operation interface of a return option or an operation interface of a cancel option. As shown in Fig. 6, the second activation sub-module 432 may further include:
a fifth activation sub-module 4323 configured to activate the operation interface of the return option or the operation interface of the cancel option, after the third activation sub-module 4321 activates the operation interface of the single-hand operation or the fourth activation sub-module 4322 activates the operation interface of the navigation button.

In an embodiment, the device may further include:
a second determination module 46 configured to, by a setting option of the mobile terminal, determine a preset operation state to be activated by the first determination module 43.

With respect to the devices in the above embodiments, the specific manners for performing operations for individual modules therein have been described in detail in the embodiments regarding the methods, which will not be elaborated herein.

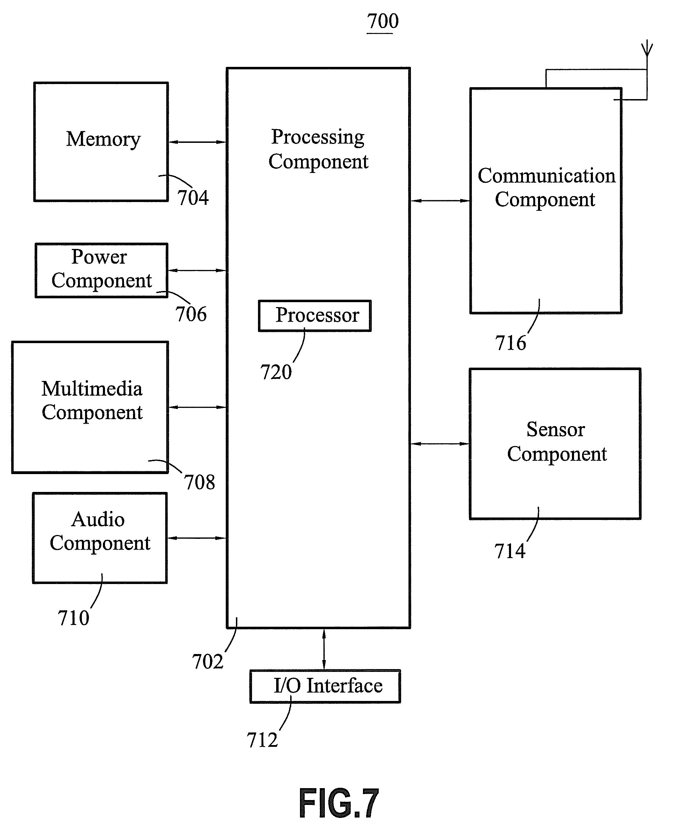

Fig. 7 is a block diagram illustrating a device applicable to activating an operation state of a mobile terminal, according to an exemplary embodiment. For example, the device 700 may be a mobile phone, a computer, a digital broadcast terminal, a messaging device, a gaming console, a tablet device, a medical device, exercise equipment, a personal digital assistant and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 usually controls the overall operations of the device 700, such as the operations associated with display, telephone calls, data communications, camera operations, and recording operations. The processing component 702 may include one or more processors 720 to execute instructions to perform all or a part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operations of the device 700. Examples of such data include instructions for any application or method operated on the device 700, contact data, phonebook data, messages, pictures, videos, etc. The memory 704 may be implemented by using any type of volatile or non-volatile memory devices or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 706 provides power to the respective components of the device 700. The power component 706 may include a power management system, one or more power sources, and other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration of time and a pressure associated with the touch or swipe action. In some embodiments, the multimedia component 708 includes a front camera and/or a rear camera. The front camera and/or the rear camera may receive external multimedia data while the device 700 is in an operation mode such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive external audio signals when the device 700 is in an operation mode such as a call mode, a recording mode and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, a button, and the like. The button may include, but not limited to, a home page button, a volume button, a starting button, and a locking button.

The sensor component 714 includes one or more sensors to provide status assessments of various aspects of the device 700. For instance, the sensor component 714 may detect an open/closed status of the device 700, relative position of components, e.g., the display and the keyboard, of the device 700, a change in position of the device 700 or a component of the device 700, a presence or absence of an user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may further include a light sensor, such as a CMOS or CCD image sensor, for use in imaging applications. In some embodiments, the sensor component 714 may further include an accelerometer sensor, a gyroscope sensor, a magnetic sensor, a pressure sensor, or a temperature sensor.

The communication component 716 is configured to facilitate communication, in a wire or wireless manner, between the device 700 and other devices. The device 700 can access a wireless network based on a communication standard, such as WiFi, 2G or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 700 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 704, executable by the processor 720 in the device 700, for performing the above described methods. For example, the non-transitory computer-readable storage medium may be a ROM, a random access memory (RAM), a CD-ROM, a magnetic tape, a floppy disc, an optical data storage device and the like.

## Claims

1. A method for activating an operation state of a mobile terminal, being implemented by the mobile terminal, **characterized in that**, the method comprises steps of:
measuring (S101, S201, S302) a first duration time for which a heel-of-hand contact event lasts on a screen of the mobile terminal;
measuring (S102) a second duration time for which a finger touches the screen; and
determining (S103) to activate a preset operation state on the mobile terminal according to the first duration time and the second duration time.

2. The method according to claim 1, **characterized in that**, the method further comprises steps of:
when it is monitored that the finger touches the screen, recording (S202) a starting time from which the finger touches the screen;
monitoring (S203), from the beginning of the starting time, whether a touch region of the finger on the screen exceeds a preset deviation range; and
when it is monitored that the touch range does not exceed the preset deviation range, performing (S204) the step of measuring (S102) the second duration time for which the finger touches the touch region.

3. The method according to claim 1 or 2, **characterized in that**, the preset operation state comprises a preset operation mode and a preset operation interface, and the step of determining (S103) to activate the preset operation state on the mobile terminal according to the first duration time and the second duration time comprises:
if it is determined that the first duration time exceeds a first preset threshold value, and the second duration time exceeds a second preset threshold value, activating the preset operation mode; and
if the first duration time exceeds the first preset threshold value, and the second duration time exceeds a third preset threshold value, activating the preset operation interface, wherein the third preset threshold value is greater than the second preset threshold value.

4. The method according to claim 3, **characterized in that**, the preset operation interface comprises at least an operation interface of a single-hand operation and an operation interface of a navigation button, and the step of activating the preset operation interface comprises steps of:
if it is determined that the first duration time exceeds the first preset threshold value, and the second duration time exceeds the third preset threshold value, activating (S306) the operation interface of the single-hand operation; and
if it is determined that the first duration time exceeds the first preset threshold value, and the second duration time exceeds a fourth preset threshold value, activating (S307) the operation interface of the navigation button, wherein the fourth preset threshold value is greater than the third preset threshold value.

5. The method according to claim 4, **characterized in that**, the preset operation interface further comprises an operation interface of a return option or an operation interface of a cancel option, and after the step of activating (S306) the operation interface of the single-hand operation or the step of activating (S307) the operation interface of the navigation button, the method further comprises a step of :
activating (S308) the operation interface of the return option or the operation interface of the cancel option.

6. The method according to any one of claims 1 to 5, **characterized in that**, the method further comprises a step of :
determining a preset operation state to be activated by a setting option of the mobile terminal.

7. A device for activating an operation state of a mobile terminal, **characterized in that**, the device comprises:
a first measurement module (41) configured to measure a first duration time for which a heel-of-hand contact event lasts on a screen of the mobile terminal;
a second measurement module (42) configured to measure a second duration time for which a finger touches the screen; and
a first determination module (43) configured to determine to activate a set operation state on the mobile terminal according to the first duration time measured by the first measurement module and the second duration time measured by the second measurement module.

8. The device according to claim 7, **characterized in that**, the device further comprises:
a recording module (44) configured to, when it is monitored that the finger touches the screen, record a starting time from which the finger touches the screen;
a monitoring module (45) configured to monitor, from beginning of the starting time obtained by the recording module, whether a touch region of the finger on the screen exceeds a preset deviation range; and
when the monitoring module (45) monitors that the touch range does not exceed the preset deviation range, the second measurement module (42) measures the second duration time for which the finger touches the touch region.

9. The device according to claim 7 or 8, **characterized in that**, the preset operation state comprises a preset operation mode and a preset operation interface, and the first determination module comprises:
a first activation sub-module (431) configured to, if the first duration time measured by the first measurement module exceeds a first preset threshold value, and the second duration time measured by the second measurement module exceeds a second preset threshold value, activate the preset operation mode;
a second activation sub-module (432) configured to, if the first duration time measured by the first measurement module exceeds the first preset threshold value, and the second duration time measured by the second measurement module exceeds a third preset threshold value, activate the preset operation interface.

10. The device according to claim 9, **characterized in that**, the preset operation interface comprises at least an operation interface of a single-hand operation and an operation interface of a navigation button, and the second activation sub-module comprises:
a third activation sub-module (4321) configured to, if the second duration time measured by the second measurement module exceeds the third preset threshold value, activate the operation interface of the single-hand operation; and
a fourth activation sub-module (4322) configured to, if the second duration time measured by the second measurement module exceeds a fourth preset threshold value, activate the operation interface of the navigation button, wherein the fourth preset threshold value is greater than the third preset threshold value.

11. The device according to claim 9 or 10, **characterized in that**, the preset operation interface further comprises an operation interface of a return option or an operation interface of a cancel option, and the second activation sub-module further comprises:
a fifth activation sub-module (4323) configured to activate the operation interface or the return option or the operation interface of the cancel option, after the third activation sub-module activates the operation interface of the single-hand operation or the fourth activation sub-module activates the operation interface of the navigation button.

12. The device according to any one of claims 7 to 11, **characterized in that**, the device comprises:
a second determination module (46) configured to, by a setting option of the mobile terminal, determine a preset operation state to be activated by the first determination module.

13. A computer program including instructions for executing the steps of a method for activating an operation state of a mobile terminal according to any one of claims 1 to 6 when said program is executed by a computer.

14. A recording medium readable by a computer and having recorded thereon a computer program including instructions for executing the steps of a method for activating an operation state of a mobile terminal according to any one of claims 1 to 6.
